(19)

Europäisches
Patentamt
European
Patent Office
Office européen
des brevets

(11) **EP 2 135 783 A1**

(12) **EUROPEAN PATENT APPLICATION**

(43) Date of publication:
**23.12.2009 Bulletin 2009/52**

(51) Int Cl.:
**B60T 8/1755** (2006.01)  **B60K 31/00** (2006.01)
**B60Q 1/54** (2006.01)

(21) Application number: **08011023.2**

(22) Date of filing: **18.06.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **GM Global Technology Operations, Inc.**
**Detroit, MI 48265-3000 (US)**

(72) Inventor: **Ghoneim, Youssef A.**
**42339 Torslanda (SE)**

(74) Representative: **Strauss, Peter**
**Adam Opel GmbH**
**Patentrecht, A0-02**
**65423 Rüsselsheim (DE)**

(54) **Motor vehicle driver assisting method**

(57)     A method for assisting the driver of a motor vehicle, comprises the steps of:
a) estimating a maximum safe amount of lateral acceleration based on one or more of detected vehicle lateral acceleration, yaw rate, vehicle longitudinal speed and steering wheel angle,
b) calculating a longitudinal vehicle speed to produce a lateral acceleration equal to said maximum safe amount, and
c) displaying a recommended longitudinal vehicle speed to the driver.

## Fig. 1

**Description**

The present invention relates to a method for assisting a driver of a motor vehicle in order to improve driving safety under potentially adverse road conditions.

In recent years, electronic stability control systems for motor vehicles have become increasingly popular. Conventionally, such systems monitor vehicle stability-related quantities such as a yaw rate error, i.e. a deviation between yaw rates expected based on vehicle speed and steering wheel angle and an observed yaw rate, and selectively brake the wheels at one side of the vehicle in order to assist cornering, i.e. to decrease the deviation between expected and observed yaw rates.

An inherent dilemma in conventional ESC systems is the fact that drivers expect them to become active reliably in critical situations and then to have a noticeable effect on the motion of the vehicle, whereas, on the other hand, the driver is easily annoyed if the ESC system interferes in a situation which he is - or at least believes to be - capable of handling himself. In order to make an ESC system as unintrusive as possible, its activation threshold will have to be set rather high, thus allowing the driver to get into a problematic situation where harsh measures of the ESC system are necessary and which might easily have been prevented with a lower activation threshold. The object of the present invention is to help solve this dilemma.

To this end, the invention provides a method for assisting a driver of a motor vehicle comprising the steps of

a) estimating a maximum safe amount of lateral acceleration based on one or more of detected vehicle lateral acceleration, yaw rate, vehicle longitudinal speed and steering wheel angle,
b) calculating a recommended longitudinal vehicle speed to produce a lateral acceleration equal to said maximum safe amount, and
c) displaying the recommended longitudinal vehicle speed to the driver.

By the use of this method, the driver is continuously kept informed about a relative level of safety of his driving operations, and he is free to improve the safety level by reducing the vehicle's speed to the recommended value. If the method is used in a vehicle having an ESC system, most interventions of the ESC system can be avoided if the driver heeds the speed recommendations provided by the method of the invention.

When estimating the maximum safe amount of lateral acceleration, the friction coefficient of a road on which the vehicle is moving should be taken into account.

According to a preferred embodiment, the estimating step a) comprises the substeps of

a1) judging, based on a discrepancy between the detected lateral acceleration or yaw rate and an expected lateral acceleration calculated or yaw rate based on the vehicle longitudinal speed and steering wheel angle, whether the vehicle is in a linear regime or in a non-linear regime,
a2) if the vehicle is judged to be in the linear regime, selecting the maximum among a previously stored maximum safe amount and the presently detected vehicle lateral acceleration and storing the selected value as said maximum safe amount; and
a3) if the vehicle is judged to be in the non-linear regime, setting the presently detected lateral acceleration as said maximum safe amount.

In the linear regime, the tire stiffness, i.e. the ratio between the sideslip angle of a vehicle tire and a lateral force acting on the vehicle and causing the sideslip is substantially constant. Therefore, based on vehicle motion parameters such as vehicle longitudinal speed, steering wheel angle or road angle, etc., an expected radius of curvature of the vehicle's track can be calculated, and based on this radius and the vehicle speed, it is straightforward to calculate the vehicle's lateral acceleration or yaw rate. If there is a substantial discrepancy between a lateral acceleration or yaw rate calculated in this way and the lateral acceleration or yaw rate observed in practice, it can be concluded that the approximation of the tire stiffness as independent of the amount of the lateral force is not exact. Instead, it can be concluded that the vehicle is in the non-linear regime, in which the sideslip varies much more strongly with the lateral force than in the linear regime. A reason for the regime to become non-linear may be a decrease in the friction coefficient of the road surface, e.g. because the vehicle has left dry ground and is starting to run on wet or even icy ground. Obviously, in the non-linear regime, there is a much more imminent menace of control over the vehicle being lost. If the vehicle is judged to be in the linear regime, it can be assumed that the vehicle is not skidding at present and has not been in the immediate past and that the capacity of the ground to hold the vehicle on its track is as good at present as it was in the immediate past. Therefore, it can be assumed that the presently detected vehicle lateral acceleration is safe, and that past values were safe, too, and the maximum among a previously stored maximum safe amount and the presently detected vehicle lateral acceleration is selected and stored as the maximum safe amount.

On the other hand, if the vehicle is judged to be in the non-linear regime, it can be assumed that the friction properties of the ground have deteriorated, so that a previously stored maximum safe amount can no longer be relied upon. Therefore, in the non-linear regime the presently detected lateral acceleration is used as said maximum safe amount, but there is no point in storing it for later use.

The above described sub-steps a1) to a3) enable to update the maximum safe amount only if the vehicle is going through curves and a non-vanishing lateral acceleration of the vehicle is detected. Between curves, the vehicle may be going straight for long times so that an estimation of the maximum safe amount carried out in a first curve prior to a straight track portion may differ substantially from the maximum safe amount in a second curve behind the straight portion. Therefore, the method further preferably comprises the sub-step of:

a4) judging whether the vehicle has been going straight for a predetermined time, and if so, setting a predetermined value as said maximum safe amount.

In other words, if no recent measurements of lateral acceleration are available on which the estimation of step a) might be based, the maximum safe amount is reset to a default value.

The predetermined time in sub-step a4) preferably is between 50 and 500 ms. It need not be shorter, since the speed at which a driver can react to a recommended speed being displayed is at least 100 ms, and it should not be larger because if it was, a reset of the maximum safe amount would occur only rarely, and a risk of an outdated estimate would be high.

The vehicle is preferably judged not to be going straight if any, i.e. one or more, of the following conditions is satisfied:

- the yaw rate rises above a predetermined first limit;
- the steering wheel angle rises above a predetermined second limit.

On the other hand, conditions for judging the vehicle to be going straight may be somewhat different:

Preferably the following conditions must be satisfied for the vehicle to be judged to be going straight:

- The yaw rate drops below a predetermined third limit which is lower than the first limit;
- The steering wheel angle drops below a predetermined fourth limit which is lower than the second limit.

In case of a yaw rate between the first and third limits or a steering wheel angle between the second and fourth limits, an earlier judgement is left unchanged.

The process of calculating the recommended longitudinal vehicle speed of step b) may be subdivided in the steps b1) of dividing a current lateral acceleration by the maximum safe amount and obtaining a square root of the ratio; and b2) multiplying the current speed by said square root to obtain a first recommended speed. Whenever the current lateral acceleration exceeds the maximum safe amount, the ratio will be less than 1, and the first recommended speed will be lower than the current speed.

Further, a second recommended speed may be estimated, which is inversely proportional to the square root of the steering wheel angle. This takes account of the fact that lateral forces are the higher, and the risk of loss of control is the greater, the greater the steering wheel angle is. In other words, the risk of loss of control increases along with the steering wheel angle, and in order to avoid a loss of control, the second recommended speed should be the lower, the greater the steering wheel angle is.

Preferably, the second recommended speed is also proportional to the square root of, $K_\mu + \dfrac{L}{V_x^2}$, $K\mu$ being the vehicle understeer, L being the distance between front and rear axles of the vehicle, and $V_x$ being the vehicle speed.

Another useful approach is to determine at least first and second recommended speed based on different criteria, in particular based on the surface friction coefficient and on the vehicle understeer, and to select as the recommended speed to be displayed at the higher one of said first and second recommended speeds.

This recommended speed is preferably displayed to the driver with intensity depending on the difference between current and recommended speeds. Namely, if the current speed is less than the recommended speed, it is not necessary to generate a warning, and the intensity at which the recommended speed is displayed may be zero. On the other hand, if the current speed is higher than the recommended speed, a threshold for the speed difference may be defined which, when exceeded, causes the display of the recommended speed to switch between different levels of intensity, e.g. between continuous and flashing.

Further, the method of the invention may be integrated into the operation of an ESC system, e.g. by lowering the intervention threshold of the ESC system if the recommended speed exceeds the current speed for more than a predetermined time. In this way, if it is found that the driver is voluntarily taking risks, this may be compensated by the ESC system intervening more liberally.

Further features and advantages of the invention will become apparent from the subsequent description of embodiments thereof referring to the appended drawings.

Fig. 1    is a block diagram of a device for implementing the method of the invention;

Fig. 2    is a flowchart of a process for estimating the friction coefficient of the road surface; and

Fig. 3    is a flowchart of a method for determining the recommended speed and controlling a display device.

For a proper understanding of the following description, it should be kept in mind that the invention will most likely be implemented in the form of an appropriately programmed microcontroller system, but that functionalities implemented as software in such a microcontroller system might as well be implemented by wired circuitry. Therefore, a description of individual features of the invention by means of circuit blocks or by means of method steps is dictated not by technical necessity but simply by the fact that in case of processes which are carried out simultaneously or the temporal relationship of which is of no concern for the invention, a description by means of a block diagram is held to be clearer than a flowchart, whereas the description of method steps by means of a flowchart is clearer if the steps can be straightforwardly grouped in a temporal order.

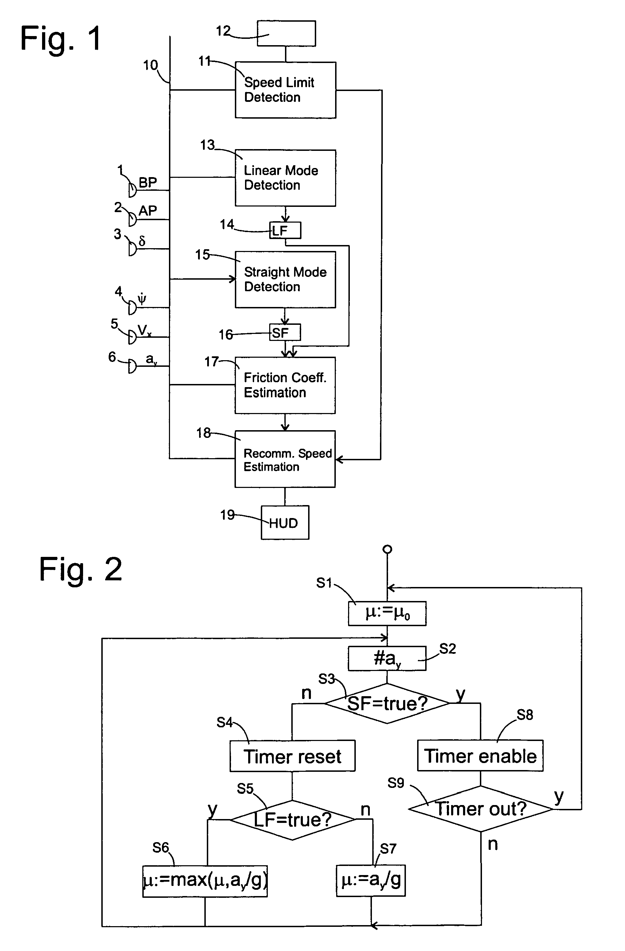

Fig. 1 is a block diagram of an apparatus for implementing the present invention. The apparatus comprises a plurality of sensors, all of which are conventionally provided in a motor vehicle, such as

a brake sensor 1 providing a brake pedal signal BP indicating whether a brake pedal is depressed or not, and, eventually, a quantitative measure of the extent to which it is depressed;

an accelerator pedal sensor 2 providing a signal AP representative of the accelerator pedal position,

a steering wheel angle sensor 3 outputting a steering wheel angle signal $\delta$ representative of the degree to which a steering wheel of the vehicle is rotated with respect to a reference orientation;

a yaw rate sensor 4 which outputs an effective yaw rate signal $\dot{\psi}$,

a speed sensor 5 providing a vehicle longitudinal speed signal $V_x$,

a lateral acceleration sensor 6 providing a vehicle lateral acceleration signal $a_y$, and others.

All these sensors are connected to a common data bus 10.

All components shown on the right hand side of data bus 10 in Fig. 1 may be components of a same microprocessor system or may be implemented by individual hardware components, as appropriate.

The apparatus of Fig. 1 comprises a speed limit detection unit 11, connected to an input device 12. The input device may e.g. comprise a radio receiver for geographic positioning signals, e.g. a GPS receiver, and a conventional navigation system. The GPS receiver enables the speed limit detection unit 11 to find out the exact geographic location of the vehicle, to identify, based on map data of the navigation system, a road on which the vehicle is currently moving, and to retrieve from the navigation system data on an eventual speed limit on this road. Alternatively, the input device 12 might be a camera providing images of the road in front of the vehicle, and the speed limit detection unit 11 comprises image processing means for identifying speed limit signs in the images and to extract speed limit information therefrom.

A linear mode detection unit 13 is connected to the bus 10 in order to decide, based on data from the various sensors 1 to 6, whether the vehicle is in a linear mode of motion or not. To this effect the linear mode detection 13 evaluates the following three conditions.

$$\left| \dot{\psi}_{des} V_x \right| - \left| a_y \right| < a_{y\_Thr1} \qquad (1)$$

$$(\dot{\psi}_{des} V_x) a_y > -a_{y\_Thr2} \qquad (2)$$

$$\dot{\psi}_{min} \leq \left| \dot{\psi}_{des} - \dot{\psi} \right| \leq \dot{\psi}_{max} \qquad (3)$$

The first condition (1) compares the difference between a measured unsigned lateral acceleration $|a_y|$ and an expected unsigned lateral acceleration $|\dot{\psi}_{des}V_x|$ to a first threshold $a_{y\_Thr1}$. The expected lateral acceleration $|\dot{\psi}_{des}V_x|$ is the product of an expected yaw rate $\dot{\psi}_{des}$ and the longitudinal speed $V_x$ of the vehicle measured by speed sensor 5. The expected yaw rate $\dot{\psi}_{des}$, in turn, can be calculated in various ways. In a simple approach an expected radius of curvature of the vehicle's track can be derived from the road angle of its steered front wheels, or, which is the same, from the product of the steering wheel angle $\delta$ and the yaw gain $\psi_{gain}$ of the steering system, neglecting all effects of centrifugal force. In that case, any sideslip experienced by the vehicle when going through a curve contributes to the difference between expected and measured lateral accelerations. In a more realistic scenario, a constant finite tire stiffness is taken into account, i.e. the expected radius of curvature of the track of the vehicle is calculated based on the assumption that the tires have a non-zero sideslip angle, and that the sideslip angle is directly proportional to the lateral force to which the vehicle is subject. In this scenario, the difference between measured and expected lateral accelerations is due to the fact that the assumed linear relationship between lateral force and sideslip angle does not hold exactly. In fact, the direct proportionality between lateral force and sideslip angle is a good approximation as long as the lateral forces are moderate. When they exceed a certain threshold - the level of which depends on the friction properties of the road surface and is a priori not exactly known- the sideslip angle increases much more strongly, and if the lateral force is excessive, control of the vehicle will be lost. Therefore, a substantial discrepancy between observed and expected lateral accelerations is symptomatic for a critical driving situation and should be avoided.

The second condition compares the product of signed expected and observed lateral accelerations $\dot{\psi}_{des}V_x$, $a_y$ to a small negative number $-a_{y\_Thr2}$. In practice, due to the inertia of the vehicle, a change in the observed lateral acceleration $a_y$ will always lag behind the expected lateral acceleration $\dot{\psi}_{des}V_x$, so that there is a possibility of the product of the two becoming negative. An excessive negative value of said product is symptomatic of a situation where the state of motion of the vehicle cannot follow the steering wheel angle $\delta$ with sufficient exactness and which should be avoided.

The third condition compares the difference between an expected and observed yaw rates to upper and lower thresholds $\dot{\psi}_{max}, \dot{\psi}_{min}$. Obviously, if this difference is above the upper threshold $\dot{\psi}_{max}$, control of the vehicle is not exact. On the other hand, if it is below the lower threshold $\dot{\psi}_{min}$, it is likely that the vehicle is going straight, and that no information about the friction properties of the road surface can be inferred from the data of the various sensors.

The above equations (1), (2) are based on the assumption that the longitudinal speed $V_x$ of the vehicle is substantially constant. The model can be refined further by replacing the following equations

$$\left| \dot{\psi}_{des}V_x + \dot{V}_{ydes} \right| - \left| a_y \right| < a_{y\_Thr1} \qquad (1')$$

$$\left( \dot{\psi}_{des}V_x + \dot{V}_{ydes} \right) a_y > -a_{y\_Thr2} \qquad (2')$$

for equations (1), (2) above. Here $\dot{V}_{ydes}$ is an expected change of the lateral velocity $V_y$ of the vehicle which results from an acceleration or deceleration of the vehicle at the expected radius of curvature.

Linear mode detection unit 13 sets a linear flag LF 14 to "true" if all of the above three conditions are fulfilled. If any of conditions (1), (2) is not fulfilled, the linear flag LF 14 is set to "false". In case of condition (3), if the upper threshold $\dot{\psi}_{max}$ is exceeded, the linear flag LF 14 is also set to "false"; if the difference falls short of the lower threshold $\dot{\psi}_{min}$, the linear flag LF 14 is left unchanged.

A straight driving mode detection unit 15 connected to bus 10 monitors the steering wheel angle $\delta$ from sensor 3 and the observed yaw rate $\dot{\psi}$ from sensor 4 and derives a straight flag SF 16. If the straight flag SF is "false", unit 15 switches it to "true" if either the steering wheel angle $\delta$ or the yaw rate $\dot{\psi}$ exceeds the predetermined threshold:

$$\left| \dot{\psi} \right| \geq \dot{\Omega}_{th\max} \qquad (6)$$

$$\left| \delta \right| \geq \delta_{th\max} \qquad (7)$$

On the other hand, if the straight flag SF 16 is "true", it is reset to "false" if either the yaw rate $\dot{\psi}$ or the steering wheel angle δ falls short of a second, lower threshold:

$$\left|\dot{\psi}\right| \leq \dot{\Omega}_{th\min} \qquad\qquad (8)$$

$$\left|\delta\right| \leq \delta_{th\min} \qquad\qquad (9)$$

If yaw rate $\dot{\psi}$ and steering wheel angle δ fall between their respective upper and lower thresholds, the straight flag SF 16 is left unchanged.

A friction coefficient estimation unit 17 operates based on input data from the sensors and the flags 14, 16. The operation of the friction coefficient estimation unit 16 is described referring to the flowchart of Fig. 2. In an initializing step S1, the estimated friction coefficient μ of the road surface is set to a predetermined default value $\mu_0$, which may be a typical friction coefficient of a dry, solid road surface. The lateral acceleration $a_y$ is read from lateral acceleration sensor 6 in step S2. Step S3 verifies the straight flag SF. If it is "false", i.e. if the vehicle is going through curves and is subject to a substantial lateral acceleration, a timer is reset to zero in step S4. Next, the unit 17 decides in step S5 whether the linear flag LF is "true" or not. If it is "true", i.e. if the vehicle has a good grip on the road surface, it can be concluded that the friction coefficient μ of the road surface must at least equal $a_y/g$, wherein g denotes the gravity acceleration. The estimated friction coefficient μ is therefore updated in step S6 to be the maximum of $a_y/g$ and an estimate obtained in step S6 of a previous iteration of the procedure. In this way, if step S6 is executed repeatedly in subsequent iterations of the procedure of Fig. 2, μ will grow and converge towards the true friction coefficient of the road surface.

On the other hand, if the linear flag is found to be "false" in step S5, this may be due to the fact that the quality of the road surface has deteriorated and its friction coefficient has decreased, or that the vehicle is going at the stability limit. In that case, $a_y/g$ is set as the new estimate of the friction coefficient μ in step S7.

If the straight flag SF is found to be "true" in step S3, no estimation of the surface friction coefficient is possible. In this case, the timer mentioned with respect to step S4 is enabled in step S8, i.e. the timer starts to run if the straight flag has just switched to "true", or it simply continues to run if the straight flag was "true" already in the previous iteration of the procedure. The value of the timer is thus representative of the time in which the vehicle has been going straight. Step S9 checks whether this time has exceeded a predetermined limit. If not, a new iteration of the method starts at step S2; if yes, it starts by resetting the friction coefficient to $\mu_0$ in step S1. In this way, if the vehicle has been going straight for such a long time the a previously acquired estimate of the friction coefficient is no longer reliable, the estimate is reset to $\mu_0$, and the process of iteratively approximating its true value restarts when the straight flag SF becomes "false" again.

Referring to Fig. 1 again, a recommended speed estimation unit 18 relies on output from the sensors, the speed limit detection unit 11 and the friction coefficient estimation unit 17 for determining a recommended speed and driving a display 19, e.g. a head-up display or a display integrated into the vehicle dashboard, based on the recommended speed.

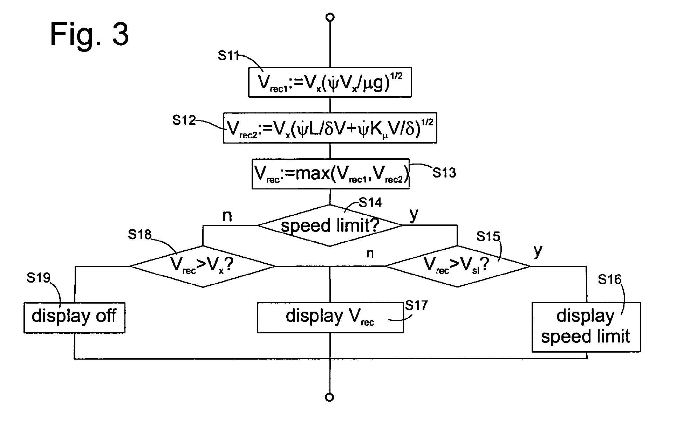

The operation of unit 18 according to a first embodiment is described referring to the flowchart of Fig. 3. In step S11, a first recommended speed is calculated according to

$$V_{rec1} = V_x \sqrt{\left|\dot{\psi}\right| V_x \Big/ \mu g} \qquad\qquad (10)$$

wherein $|\dot{\psi}|$ is the absolute yaw rate of the vehicle measured by yaw rate sensor 4. In practice, the square root in the above expression is always equal to or smaller than 1, since the lateral acceleration of the vehicle given by $\dot{\psi}V_x$ cannot exceed μg.

Step S12 calculates a second recommended speed Vrec2 according to

$$V_{rec2} = V_x \sqrt{\left|\dot{\psi}\right| \left|\frac{L + K_\mu V_x^2}{\delta V_x}\right|} \qquad (11)$$

wherein $K_\mu$ is the understeer $K_\mu = \dfrac{W_f}{C_f} - \dfrac{W_r}{C_r}$ , calculated based on the assumption that front and rear tire stiffnesses $C_f$, $C_r$ are independent of yaw rate $\dot{\psi}$ or lateral acceleration $a_y$.

Step S13 selects the higher one of the recommended speeds $V_{rec1}$ and $V_{rec2}$. If the speed limit detection unit 11 indicates the existence of an official speed limit for the road on which the vehicle is moving, the process branches from step S14 to step S15, where it is decided whether the recommended speed $V_{rec}$ selected in step S13 is higher than the speed limit $V_{s1}$ or not. If it is, the speed limit $V_{s1}$ is displayed in step S16; if not, the recommended speed $V_{rec}$ is displayed in step S17. If no speed limit exists, step S18 compares the recommended speed $V_{rec}$ to the current speed $V_x$. If the recommended speed would be higher than the current speed $V_x$, the display is switched off in step S19; otherwise, the recommended speed is displayed in step S17.

In an alternative embodiment, estimation unit 18 calculates a recommended speed according to:

$$V_{rec} = \frac{1}{2}\left( \frac{1}{K_{\mu act}\dot{\psi}_{des\_gain\_lim}} - sign(\frac{1}{(K_{\mu act}\dot{\psi}_{des\_gain\_lim})^2} - \frac{4L}{K_{\mu act}}) \sqrt{\left|\frac{1}{(K_{\mu act}\dot{\psi}_{des\_gain\_lim})^2} - \frac{4L}{K_{\mu act}}\right|} \right) \qquad (12)$$

wherein $K_{\mu act}$ is given by

$$K_{\mu act} = \frac{L}{V_x^2}\left( \frac{\partial \delta}{\partial (L/R)} - 1 \right) \qquad (13)$$

and

$$\dot{\psi}_{des\_gain\_lim} = \min(\frac{V_x}{L + V_x^2\left(\dfrac{W_f}{C_f} - \dfrac{W_r}{C_r}\right)}, \frac{\mu g}{V_x \delta}) \ . \qquad (14)$$

**List of reference signs**

| | |
|---|---|
| 1 | brake sensor |
| 2 | accelerator pedal sensor |
| 3 | steering wheel angle sensor |
| 4 | yaw rate sensor |
| 5 | speed sensor |
| 6 | lateral acceleration sensor |
| 10 | data bus |
| 11 | speed limit detection unit |
| 12 | input device |
| 13 | linear mode detection unit |
| 14 | linear flag |

15    straight driving mode detection unit
16    straight flag
17    friction coefficient estimation unit
18    recommended speed estimation unit
19    display

**Claims**

**1.** A method for assisting the driver of a motor vehicle, comprising the steps of:

a) estimating a maximum safe amount of lateral acceleration based on one or more of detected vehicle lateral acceleration, yaw rate, vehicle longitudinal speed and steering wheel angle (S2-S7),
b) calculating a longitudinal vehicle speed to produce a lateral acceleration equal to said maximum safe amount (S11-S13), and
c) displaying a recommended longitudinal vehicle speed to the driver (S17).

**2.** The method of claim 1, wherein step a) comprises estimating the friction coefficient of a road surface (S6, S7).

**3.** The method of claim 1 or 2, wherein step a) comprises the sub-steps of:

a1) judging, based on a discrepancy between the detected lateral acceleration or yaw rate and an expected lateral acceleration or yaw rate calculated based on the vehicle longitudinal speed and steering wheel angle, whether the vehicle is in a linear regime or in a non-linear regime (S5),
a2) if the vehicle is judged to be in the linear regime, selecting the maximum among a previously stored maximum safe amount and the presently detected vehicle lateral acceleration and storing the selected value as said maximum safe amount (S6); and
a3) if the vehicle is judged to be in the non-linear regime, setting the presently detected lateral acceleration as said maximum safe amount (S7).

**3.** The method of claim 1 or 2, wherein step a) comprises the sub-step of:

a4) judging whether the vehicle has been going straight for a predetermined time (S9) and, if so, setting a predetermined value as said maximum safe amount (S1).

**4.** The method of claim 3, wherein said predetermined time is between 50 and 500 ms.

**5.** The method of claim 3 or 4, wherein the vehicle is judged not to be going straight if any of the following conditions is satisfied:

- the yaw rate rises above a predetermined first limit;
- the steering wheel angle rises above a predetermined second limit.

**6.** The method of claim 5, wherein the vehicle is judged to be going straight if the following conditions are satisfied:

- the yaw rate drops below a predetermined third limit which is lower than the first limit;
- the steering wheel angle drops below a predetermined fourth limit which is lower than the second limit.

**7.** The method of any of the preceding claims, wherein step b) comprises the sub-steps of

b1) dividing a current lateral acceleration by the maximum safe amount, and obtaining a square root of the ratio (S11);
b2) multiplying the current speed by said square root to obtain a first recommended speed (S11).

**8.** The method of any of the preceding claims, wherein step b) comprises the sub-steps of

b3) estimating a second recommended speed inversely proportional to the square root of the steering wheel angle (S12).

**9.** The method of claim 8, wherein the second recommended speed is proportional to the square root of

$$K_\mu + L\big/V_x^2 \;,$$ $K_\mu$ being the vehicle understeer, L being the distance between front and rear axles of the vehicle, and $V_x$ being the vehicle speed.

**10.** The method of any of the preceding claims, wherein step b) comprises the sub-steps of

b4) determining a first recommended speed dependent on the surface friction coefficient (S11),
b5) determining a second recommended speed dependent on the vehicle understeer (S12), and
b6) selecting as said recommended speed the higher one of said first and second recommended speeds (S13).

**11.** The method of any of the preceding claims, wherein step b) comprises the sub-steps of

b4/5) determining at least one of a first recommended speed dependent on the surface friction coefficient, and a second recommended speed dependent on the vehicle understeer (S11-S13), and
b7) detecting an official speed limit, and
b8) selecting as said recommended speed at most the smaller one of said recommended speed and said official speed limit.

**12.** The method any of the preceding claims, wherein the recommended speed is displayed in step c) with an intensity dependent on the difference between current and recommended speeds.

**13.** The method of any of the preceding claims, wherein the recommended speed is displayed in step c) only if it is less than the current speed.

**14.** The method of any of the preceding claims, further comprising the step

d) lowering the intervention threshold of an ESC system if the recommended speed exceeds the current speed for more than a predetermined time.

# Fig. 1

# Fig. 2

# Fig. 3

S11 — $V_{rec1} := V_x(\dot\psi V_x/\mu g)^{1/2}$

S12 — $V_{rec2} := V_x(\dot\psi L/\delta V + \dot\psi K_\mu V/\delta)^{1/2}$

$V_{rec} := \max(V_{rec1}, V_{rec2})$ — S13

S14 — speed limit? — n / y

S18 — $V_{rec} > V_x$? — n

S15 — $V_{rec} > V_{sl}$? — y

S19 — display off

display $V_{rec}$ — S17

S16 — display speed limit

Europäisches
Patentamt

European
Patent Office

Office européen
des brevets

**EUROPEAN SEARCH REPORT**

Application Number

EP 08 01 1023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 870 674 A (BOSCH GMBH ROBERT [DE]) 26 December 2007 (2007-12-26) * column 5, line 33 - column 8, line 22; figures 2,3 * | 1,2,13 | INV. B60T8/1755 B60K31/00 B60Q1/54 |
| Y | | 10-12 | |
| X | US 6 498 976 B1 (EHLBECK JAMES M [US] ET AL) 24 December 2002 (2002-12-24) * column 7, line 56 - column 9, line 18 * * column 19, line 8 - column 23, line 16; figures 4-6,7B,7C * | 1,3,4,13 | |
| Y | | 5,7,8,14 | |
| Y | US 6 856 886 B1 (CHEN SHIH-KEN [US] ET AL) 15 February 2005 (2005-02-15) * figure 6 * | 5 | |
| Y | WO 02/100696 A (CONTINENTAL TEVES AG & CO OHG [DE]; KUEMMEL MARTIN [DE]; SCHAFIYHA SCH) 19 December 2002 (2002-12-19) * page 7, paragraph 2 - page 9, paragraph 3 * | 7,8 | TECHNICAL FIELDS SEARCHED (IPC) |
| Y | EP 1 460 600 A (DAIMLER CHRYSLER AG [DE]) 22 September 2004 (2004-09-22) * column 2, line 10 - column 3, line 43 * | 10-12 | B60T B60K B60Q |
| Y | DE 199 19 833 C1 (DAIMLER CHRYSLER AG [DE]; CONTINENTAL TEVES AG & CO OHG [DE]) 23 November 2000 (2000-11-23) * column 6, line 14 - column 6, line 36 * | 14 | |
| A | US 6 392 535 B1 (MATSUNO KOJI [JP] ET AL) 21 May 2002 (2002-05-21) * column 5, line 6 - column 11, line 49 * | 1-14 | |

The present search report has been drawn up for all claims

| Place of search | Date of completion of the search | Examiner |
|---|---|---|
| Munich | 11 December 2008 | Marx, Winfried |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 01 1023

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2008

| Patent document cited in search report | | Publication date | Patent family member(s) | | Publication date |
|---|---|---|---|---|---|
| EP 1870674 | A | 26-12-2007 | DE 102006028277 A1 | | 27-12-2007 |
| US 6498976 | B1 | 24-12-2002 | NONE | | |
| US 6856886 | B1 | 15-02-2005 | DE 102005013255 A1 | | 20-10-2005 |
| WO 02100696 | A | 19-12-2002 | DE 10128357 A1 | | 06-03-2003 |
| | | | EP 1399344 A1 | | 24-03-2004 |
| | | | JP 2004533957 T | | 11-11-2004 |
| | | | US 2004215384 A1 | | 28-10-2004 |
| EP 1460600 | A | 22-09-2004 | AT 362159 T | | 15-06-2007 |
| | | | DE 10311863 A1 | | 30-09-2004 |
| DE 19919833 | C1 | 23-11-2000 | WO 0066408 A1 | | 09-11-2000 |
| US 6392535 | B1 | 21-05-2002 | NONE | | |

EPO FORM P0459

For more details about this annex : see Official Journal of the European Patent Office, No. 12/82